# EUROPÄISCHE PATENTSCHRIFT

(11) **EP 2 576 403 B1**
(45) Veröffentlichungstag und Bekanntmachung des Hinweises auf die Patenterteilung: **18.06.2014**
(21) Anmeldenummer: 11720298.6
(22) Anmeldetag: 10.05.2011
(51) Int. Cl.: B65G 21/20, B65G 15/32

(54) **MAGNETFÖRDEREINRICHTUNG**
MAGNETIC CONVEYING DEVICE
DISPOSITIF DE TRANSPORT MAGNÉTIQUE

(30) Priorität: 27.05.2010 DE 202010007281 U
(43) Veröffentlichungstag der Anmeldung: 10.04.2013
(73) Patentinhaber: Neuhäuser GmbH, 44532 Lünen (DE)
(72) Erfinder: NEUHÄUSER, Jürgen, 44532 Lünen (DE)
(74) Vertreter: Nunnenkamp, Jörg
(86) Internationale Anmeldenummer: PCT/EP2011/057556
(87) Internationale Veröffentlichungsnummer: WO 2011/147684

(56) Entgegenhaltungen:
- EP-A1- 1 705 198
- WO-A1-02/066312
- WO-A1-2009/092174
- DE-A1- 19 942 882
- DE-A1-102005 001 568
- GB-A- 1 581 342

## Beschreibung

Die Erfindung betrifft eine Magnetfördereinrichtung zum Transport von insbesondere plattenförmigen Gegenständen, mit mehreren in Förderrichtung hintereinander angeordneten Magnethalteelementen, ferner mit zumindest einem an den Magnethalteelementen vorbeilaufenden Förderband, welches mit mehreren auf seiner den Gegenständen abgewandten Oberseite angeordneten Zähnen zum Eingriff in zugehörige Antriebselemente für den Antrieb des Förderbandes ausgerüstet ist, und mit an die Magnethalteelemente angeschlossenen Führungsleisten, welche an den Zähnen sowie an der Oberseite des Förderbandes anliegen.

Solche Magnetfördereinrichtungen werden üblicherweise für den hängenden oder aufliegenden Transport von Blechen eingesetzt. Hierbei kann es sich um Gehäusebleche für insbesondere Haushaltsmaschinen, Stanzteile in der Automobilindustrie, Dosendeckel etc. handeln. Derartige plattenförmige Gegenstände sind ferromagnetisch ausgelegt, um sie mit Hilfe der Magnethalteelemente an das vorbeilaufende Förderband anzulegen und zielgenau abzuwerfen. Dazu wird mit schaltbaren Elektromagneten als Magnethalteelemente gearbeitet. Daneben können aber auch Permanentmagnete zum Einsatz kommen.

Sollen nichtferromagnetische Werkstoffe, wie beispielsweise Glasplatten, Holzplatten etc. mit einer solchen Magnetfördereinrichtung transportiert werden, so ist diese üblicherweise und ergänzend mit Unterdruckhalteelementen ausgerüstet. Solche kombinierten Förderer werden beispielsweise im gattungsbildenden Stand der Technik nach der EP 0 893 372 A1 oder auch in der ebenfalls gattungsbildenden DE 10 2005 001 568 A1 beschrieben, die den nächstkommenden Stand der Technik darstellt.

Ähnlich geht die ebenfalls gattungsbildende EP 0 827 920 A2 vor. Vergleichbares gilt für die WO 97/38927 A1. Der Stand der Technik hat sich insgesamt bewährt. Allerdings treten in der Praxis zunehmend Probleme auf, die sich auf eine erhebliche Steigerung der Transportgeschwindigkeit in neuerer Zeit zurückführen lassen. Tatsächlich sind nämlich die eingesetzten Förderbänder üblicherweise aus Kunststoff, beispielsweise PUR (Polyurethan) gefertigt. Demgegenüber handelt es sich bei den Magnethalteelementen um solche, die metallisch ausgelegt sind, beispielsweise aus Stahl hergestellt werden.

Infolge der zunehmenden Fördergeschwindigkeiten werden aktuell elektrostatische Aufladungen beobachtet, die sich primär auf die Reibung zwischen dem Förderband und den Magnethalteelementen, respektive den optionalen Unterdruckhalteelementen zurückführen lassen. Hieran ändert auch die Tatsache nichts, dass im Rahmen der EP 0 893 372 A1 das fragliche Förderband teilweise mit einer Polyamid-Beschichtung im Bereich einer Kontaktfläche mit einem Führungskörper ausgerüstet ist (vgl. Bezugszeichen 2' in der Fig. 6). Denn hierdurch wird zwar insgesamt die Reibung verringert, kann allerdings nach wie vor eine "elektrostatische Aufladung" des Förderbandes nicht unterbunden werden.

Solche elektrostatischen Aufladungen sind bei einer Magnetfördereinrichtung besonders schädlich. Denn sie führen zu mehreren Problemen. Zunächst einmal sorgt die elektrostatische Aufladung des Förderbandes dafür, dass Staub, etwaige Metallspäne etc. von dem Förderband angezogen werden und die Magnetfördereinrichtung, das Förderband und/oder die transportierten Gegenstände verschmutzen. Auch ein wachsender Verschleiß der Magnetfördereinrichtung wird beobachtet. Noch gravierender ist jedoch der Umstand, dass sich die elektrostatischen Aufladungen unkontrolliert entladen und dadurch Funken entstehen, welche die einwandfreie Funktionsweise der Magnethalteelemente empfindlich stören. Das heißt, insbesondere schaltbare Elektromagnete als Magnethalteelemente werden in ihrer Arbeitsweise gestört. Dadurch ist beispielsweise ein einwandfreier Abwurf der zu transportierenden Gegenstände nicht mehr gewährleistet. Hier will die Erfindung insgesamt Abhilfe schaffen.

Der Erfindung liegt das technische Problem zugrunde, eine derartige Magnetfördereinrichtung so weiterzuentwickeln, dass der Verschleiß verringert wird und eine etwaige Funkenbildung durch elektrostatische Aufladung nicht mehr auftritt.

Zur Lösung dieser technischen Problemstellung schlägt die Erfindung bei einer gattungsgemäßen Magnetfördereinrichtung vor, dass die Führungsleisten eine Metallbeschichtung aufweisen und/oder eine solche aus einem Kunststoff, und dass wenigstens die Oberseite des Förderbandes, d.h. die den Gegenständen abgewandte und den Magnethalteelementen zugewandte Seite mit den dort angeordneten Zähnen, eine vollflächige sowie antistatische Beschichtung aufweist, welche einen elektrischen Oberflächenwiderstand besitzt, der unterhalb von 100 kΩ angesiedelt ist.

Im Rahmen der Erfindung wird also primär die Oberseite des Förderbandes, das heißt, die den Gegenständen abgewandte und den Magnethalteelementen zugewandte Seite mit den dort angeordneten Zähnen mit der fraglichen antistatischen Beschichtung ausgerüstet. Das geschieht vollflächig. Mit anderen Worten werden ausdrücklich die auf der Oberseite angeordneten Zähne zum Eingriff in die zugehörigen Antriebselemente ebenso wie benachbarte Flächen mit der fraglichen antistatischen Beschichtung ausgerüstet. Die antistatische Beschichtung überdeckt die fragliche Oberseite des Förderbandes inklusive der Zähne also durchgängig, das heißt vollflächig. - Grundsätzlich kann natürlich ergänzend auch die den zu transportierenden Gegenständen zugewandte Unterseite des Förderbandes mit einer solchen vollflächigen sowie antistatischen Beschichtung ausgerüstet werden. Dies ist im Regelfall jedoch nicht erforderlich, weil die Gegenstände ortsfest am Förderband anliegen und keine Relativbewegung und folglich Reibung beobachtet wird. Das ist zwischen der Oberseite des Förderbandes und den Magnethalteelementen anders, weil die Magnethalteelemente im Allgemeinen ortsfest sind und das Förderband hieran reibend entlang geführt wird.

Durch die Beschichtung werden mehrere positive Effekte erreicht. Zunächst einmal sorgt die antistatische Beschichtung der Oberseite des Förderbandes dafür, dass durch eine Reibung des Förderbandes entstehende etwaige elektrostatische Ladungen unmittelbar abgeführt werden. Das stellt die antistatische Beschichtung sicher, welche mit einer bestimmten vorgegebenen elektrischen Leitfähigkeit ausgerüstet ist bzw. einen elektrischen Oberflächenwiderstand aufweist, der üblicherweise unterhalb von 100 kΩ angesiedelt ist.

Meistens werden sogar elektrische Oberflächenwiderstände unterhalb von 50 kΩ beobachet. Auf diese Weise werden elektrostatische Aufladungen wirksam abgeleitet, nämlich unmittelbar über die (metallisch ausgelegten) Magnethalteelemente bzw. ein die Magnethalteelemente aufnehmendes Maschinengestell.

Ergänzend wird die antistatische Ausrüstung mit Hilfe der vollflächigen Beschichtung dadurch verbessert, dass der Reibungswiderstand zwischen dem Förderband und den Magnethalteelementen herabgesetzt wird. Zu diesem Zweck sind die Führungsleisten vorgesehen, welche an die Magnethalteelemente angeschlossen sind. Das jeweilige Förderband liegt mit seiner Oberseite und den Zähnen an den fraglichen Führungsleisten an. Dabei ist es im Rahmen der Erfindung gelungen, eine Beschichtung der fraglichen Führungsleisten und ebenso diejenige des Förderbandes reibungsreduzierend auszulegen.

Insgesamt ist die Auslegung so getroffen, dass die Führungsleisten an den Magnethalteelementen einerseits und die vollflächige Beschichtung der Oberseite des Förderbandes andererseits so ausgebildet sind, dass sie eine Reibpaarung mit einer Reibzahl von weniger als 0,2 bilden. Das gilt jedenfalls für Gleitreibung. Insbesondere werden an dieser Stelle sogar Reibzahlen bzw. Reibungszahlen von weniger als 0,1 beobachtet. Damit werden ähnliche Reibungsverhältnisse erreicht, wie sie bei der trocknen Gleitreibung von Stahl zu Stahl vorliegen, die zu Reibzahlen im Bereich zwischen ca. 0,05 bis 0,2 korrespondiert.

In diesem Zusammenhang ist erfindungsgemäß vorgesehen, dass die (aus Stahl oder Metall gefertigten) Führungsleisten mit einer speziellen Beschichtung ausgerüstet sind. Bei dieser Beschichtung handelt es sich um eine Metallbeschichtung und/oder eine Kunststoffbeschichtung. Im erstgenannten Fall empfiehlt die Erfindung eine Chrombeschichtung. Alternativ oder zusätzlich ist auch eine Beschichtung mit einem Kunststoff, insbesondere PTFE (Polytetrafluorethylen) besonders günstig. So beobachtet man bei PTFE-beschichteten Führungsleisten und einem entsprechend mit einer reibungsreduzierenden Beschichtung ausgerüsteten Förderband Reibzahlen bzw. Reibungszahlen der Reibpaarung von sogar weniger als 0,05, die in den Bereich der Gleitreibung der Materialpaarung Stahl zu PTFE kommen. Um dies im Detail zu erreichen, ist die Beschichtung des Förderbandes an der Oberseite üblicherweise als Gewebebeschichtung ausgelegt. Meistens kommt an dieser Stelle eine Kunststoffgewebebeschichtung zum Einsatz.

Hier haben sich elektrisch leitfähige Fasern als besonders günstig erwiesen. Diese lassen sich beispielsweise auf Basis von Polyamid oder vergleichbaren thermoplastischen Kunststoffen realisieren. Tatsächlich haben sich insbesondere teilkristalline thermoplastische Polymere, wie das zuvor bereits angesprochene Polyamid, als besonders günstig erwiesen.

Der fragliche thermoplastische Kunststoff ist besonders abriebfest und verschleißfest ausgelegt. Außerdem weisen solche thermoplastischen Kunststoffe üblicherweise eine Wasseraufnahme von ca. 1 Gew.-% bis 3 Gew.-% auf (bei einer 23 °C warmen Luftatmosphäre mit 50 Gew.-% Luftfeuchtigkeit). Dadurch erklärt sich die besondere Geschmeidigkeit und Flexibilität solcher thermoplastischen Kunststoffe bzw. des besonders bevorzugt eingesetzten Polyamids. Außerdem wird hierdurch der geringe elektrische Widerstand begünstigt.

Hierzu trägt ergänzend bei, dass der fragliche thermoplastische Kunststoff zur Herstellung der Kunststoffgewebebeschichtung einen elektrisch leitfähigen Kohlenstoff in einer Menge von ca. 15 Gew.-% bis 50 Gew.-% enthält. Bei dem fraglichen leitfähigen Kohlenstoff handelt es sich üblicherweise um Ruß.

Dieser elektrisch leitfähige Ruß kann in dem zu verarbeitenden Polymer dispergiert werden. In diesem Zusammenhang hat sich herausgestellt, dass insbesondere Polyamide mit ihren polaren Gruppen hochgradig mit dem elektrisch leitfähigen Ruß bzw. Kohlenstoff verträglich sind. Die Polyamide behalten ihre hohe Fließfähigkeit auch dann bei, wenn eine große Menge an elektrisch leitfähigem Ruß im Zuge der Dispersion einverleibt wird, nämlich die zuvor bereits angesprochene Menge von 15 Gew.-% bis 50 Gew.-% Ruß in dem fraglichen thermoplastischen Kunststoff (Polyamid). Dadurch lassen sich insgesamt elektrisch leitfähige, flexible und zugleich hochfeste Fasern respektive Fäden realisieren, die zu dem gewünschten Polyamidgewebe verarbeitet werden. Dabei werden insgesamt überlegene mechanische Eigenschaften beobachtet, da eine gute Haftung zwischen dem Polyamid und dem elektrisch leitfähigen Ruß besteht.

Damit das fragliche Gewebe eine zugleich verschleißfeste und flexible Beschichtung für den Fördergurt bzw. das Förderband zur Verfügung stellt, hat es sich bewährt, wenn das Gewebe insgesamt mit mehr als 5 Kettfäden/cm und 5 Schussfäden/cm ausgerüstet ist. In der Regel werden sogar deutlich mehr als 10 Kett- und Schussfäden/cm realisiert, meistens sogar mehr als 20 Fäden/cm. Dadurch entsteht eine nahezu geschlossene Oberfläche des Förderbandes an seiner den Magnethalteelementen zugewandten Oberseite, an welcher die Führungsleisten entlang gleiten.

Durch diese Maßnahmen wird insgesamt eine geringe Reibung mit Reibzahlen von weniger als 0,2, insbesondere weniger als 0,1 und ganz besonders bevorzugt sogar von weniger als 0,05 zwischen den fraglichen Führungsleisten und der Oberseite des Förderbandes beobachtet. In Verbindung mit dem durch das aufgebrachte und antistatisch wirkende Gewebe erreichten elektrischen Oberflächenwiderstand von deutlich weniger als 100 kΩ des Förderbandes werden insgesamt elektrostatische Aufladungen von vornherein vermieden. Dadurch treten mit solchen elektrostatischen Aufladungen verbundene negative Effekte nicht (mehr) auf.

Hinzu kommt, dass sich die erfindungsgemäße Magnetfördereinrichtung durch einen besonders energiearmen Betrieb auszeichnet, folglich besonders energieeffizient arbeitet. Dies stellt einen weiteren positiven Nebeneffekt der geringen Reibung zwischen den Führungsleisten und der Oberseite des Förderbandes bzw. dem Förderband dar. Dadurch kann die Antriebsleistung reduziert werden und lassen sich die Investitions- und Betriebskosten verringern.

Als weiterer positiver Effekt ist zu nennen, dass die Geräuschentwicklung im Vergleich zu bisherigen Magnetfördereinrichtungen deutlich reduziert ist, im Regelfall sogar eine Halbierung des Geräuschpegels beobachtet wird. Dies lässt sich primär darauf zurückführen, dass die Zähne an der Oberseite des Förderbandes ebenfalls über die erfindungsgemäße und reibungsreduzierende Beschichtung verfügen. Dadurch wird der Ein- und Auslauf der Zähne in zugehörige Ausnehmungen eines Antriebselementes bzw. Antriebsrades am Maschinengestell optimiert. Denn sowohl beim Ein- als auch beim Auslauf treffen keine harten Kanten oder Ecken mehr aufeinander, sorgt vielmehr die durchgängige Gewebebeschichtung der Zähne für einen gleitenden und fließenden Übergang. Dadurch wird insbesondere im Bereich der fraglichen Antriebsräder die Geräuschentwicklung deutlich reduziert. Das gilt dann natürlich auch für den gesamten Betrieb der erfindungsgemäßen Magnetfördereinrichtung.

Als weitere Besonderheit ist zu vermerken, dass das Förderband - selbst bei großen Baulängen - auf zusätzliche Führungsleisten verzichtet und auch verzichten kann, wie sie beispielsweise in der EP 0 827 920 A2 in der dortigen Fig. 2 mit dem Bezugszeichen 43 dargestellt sind und in der Praxis bisher als unabdingbar angesehen werden. Hierzu trägt die ergänzende Maßnahme bei, dass das Förderband in Förderrichtung verlaufende Stahlseile oder Stahllitzen aufweist, die in das Förderband eingebettet sind. Die fraglichen Stahllitzen werden von den mehreren in Förderrichtung hintereinander angeordneten Magnethalteelementen magnetisch angezogen und sorgen dafür, dass das Förderband einwandfrei an die Magnethalteelemente bzw. die Führungsleisten angelegt wird und nicht durchhängt. Zusätzliche Halteleisten sind also nicht erforderlich. Dadurch wird die Reibung nochmals verringert und zugleich auch die Geräuschentwicklung verbessert.

Schlussendlich hat sich der Rückgriff auf einen Zahnriemen als Förderband als besonders günstig erwiesen. Dabei sind meistens zwei in Förderrichtung hintereinander angeordnete Zahnreihen realisiert. Die Zahnreihen sind voneinander beabstandet und weisen darüber hinaus einen jeweiligen Randabstand zum Rand des Förderbandes auf. Dadurch können in die auf diese Weise entstehenden drei Lücken in Förderrichtung des Förderbandes insgesamt drei Führungsleisten eingreifen. Auf diese Weise wird ein einwandfrei geführter Transport des Förderbandes auch bei großen Baulängen zur Verfügung gestellt. Hierin sind die wesentlichen Vorteile zu sehen.

Im Folgenden wird die Erfindung anhand einer lediglich ein Ausführungsbeispiel darstellenden Zeichnung näher erläutert; es zeigen:
- Fig. 1: eine Magnetfördereinrichtung in schematischem Querschnitt,
- Fig. 2: ein Detail aus Fig. 1 und
- Fig. 3: einen Ausschnitt aus Fig. 2 im Bereich des Förderbandes.

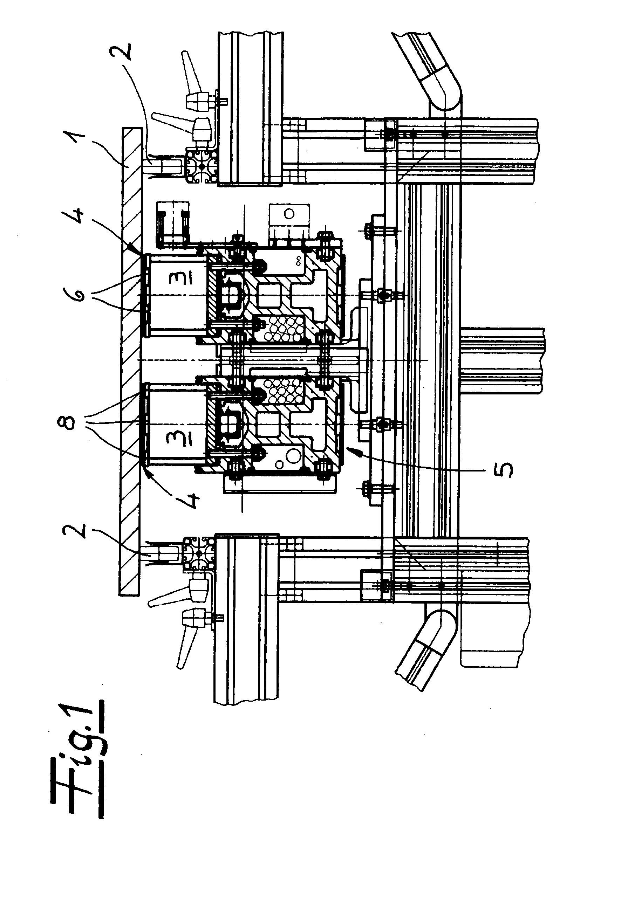

In der Fig. 1 ist eine Magnetfördereinrichtung dargestellt, welche im Rahmen des Ausführungsbeispiels zum aufliegenden Transport von plattenförmigen Gegenständen 1 genutzt wird. Tatsächlich handelt es sich vorliegend bei dem zu transportierenden Gegenstand 1 um eine Stahlplatte 1, die mit Hilfe der nachfolgend noch näher zu beschreibenden Magnetfördereinrichtung senkrecht zur Zeichenebene in der Fig. 1 gefördert wird. Dabei wird die Stahlplatte 1 bzw. der plattenförmige Gegenstand 1 jeweils randseitig mit Hilfe von Stützrollen 2 abgestützt, was selbstverständlich nur beispielhaft zu verstehen ist und keine zwingende Voraussetzung darstellt.

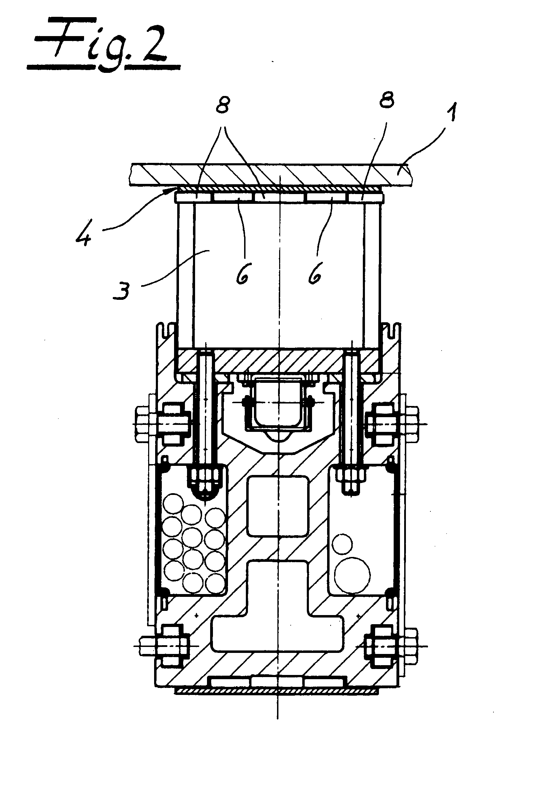

Die betreffende Magnetfördereinrichtung verfügt über mehrere in Förderrichtung hintereinander angeordnete Magnethalteelemente 3. Ein solches Magnethalteelement 3 ist im Detail in der Fig. 2 dargestellt. Vorliegend handelt es sich um einen schaltbaren Elektromagneten, dessen Magnetkraft ein- und ausgeschaltet werden kann. Dadurch lässt sich der plattenförmige Gegenstand 1 zielgenau von einem zugehörigen Förderband 4 abheben. Das gilt jedenfalls für den dargestellten aufliegenden Transport. Im Falle eines ebenfalls möglichen hängenden Transportes der plattenförmigen Gegenstände 1 sorgt das betreffende Magnethalteelement 3 für einen zielgenauen Abwurf. Das ist jedoch nicht dargestellt.

An dem Magnethalteelement 3 bzw. den mehreren in Förderrichtung hintereinander angeordneten Magnethalteelementen 3 läuft das bereits angesprochene Förderband 4 vorbei. Tatsächlich sind im Ausführungsbeispiel zwei Reihen an Magnethalteelementen 3 mit jeweils zugehörigem Förderband 4 realisiert, die voneinander beabstandet und parallel zueinander in Förderrichtung angeordnet sind. Für die Anbringung und Halterung des jeweiligen Magnethalteelementes 3 und die Führung des Förderbandes 4 sorgt ein lediglich schematisch angedeutetes Maschinengestell 5. Dieses mag so ausgelegt sein, dass die Magnethalteelemente 3 inklusive zugehörigem Förderband 4 in ihrer Position in Bezug auf die zu fördernden Gegenstände 1 verändert werden können.

Bei dem Förderband 4 handelt es sich um ein solches, welches mit mehreren auf seiner den zu transportierenden Gegenständen abgewandten Oberseite mit Zähnen 6 ausgerüstet ist. Die Zähne 6 greifen in zugehörige und nicht ausdrücklich dargestellte Antriebselemente ein. Bei den Antriebselementen handelt es sich um Zahnräder bzw. Antriebsräder, welche umfangseitig mit Taschen zur Aufnahme der fraglichen Zähne 6 ausgerüstet sind. Folgerichtig ist das jeweilige Förderband 4 als Zahnriemen ausgelegt und handelt es sich bei den Antriebsrädern um Zahnriemenräder. Diese sorgen für den Antrieb des Förderbandes 4 in der Förderrichtung.

Da die plattenförmigen Gegenstände 1 ferromagnetisch ausgelegt sind, werden sie von den in Förderrichtung hintereinander angeordneten und ortsfest ausgelegten Magnethalteelementen 3 angezogen. Für den Transport der besagten Gegenstände 1 sorgt das jeweilige Förderband, welches mit Hilfe der im Maschinengestell 5 gelagerten Antriebsräder in der besagten Förderrichtung bewegt wird. Das ist grundsätzlich bekannt, wozu beispielhaft auf den Stand der Technik nach der EP 0 827 920 A2 verwiesen sei.

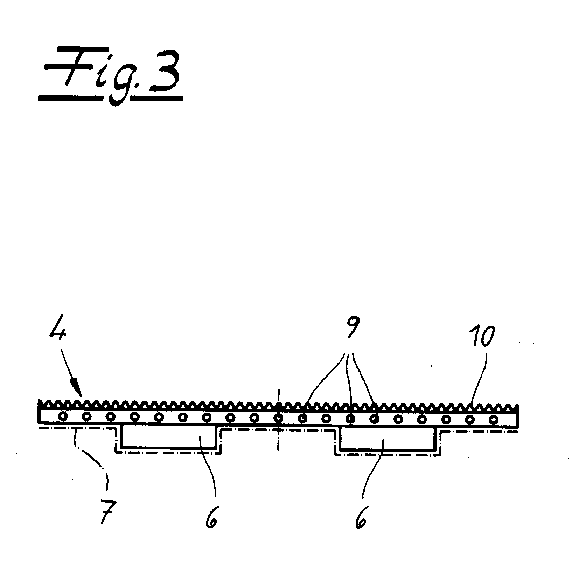

Erfindungsgemäß wird nun eine spezielle Ausrüstung des Förderbandes 4 verfolgt. Denn das jeweilige Förderband 4 verfügt an wenigstens seiner Oberseite über eine vollflächige und antistatische Beschichtung 7. Dies erkennt man am besten anhand der vergrößerten Darstellung in der Fig. 3. Die besagte vollflächige Beschichtung 7 deckt die gesamte Oberseite des Förderbandes 4 einschließlich der Zähne 6 gegenüber den Halteelementen 3 ab.

Die antistatische Auslegung der Beschichtung 7 wird im Rahmen der Erfindung dergestalt bewerkstelligt, dass es sich bei der Beschichtung 7 um ein spezielles Kunststoffgewebe handelt. Tatsächlich kommt eine Gewebebeschichtung, insbesondere Kunststoffgewebebeschichtung zum Einsatz, welche auf einen thermoplastischen Kunststoff als Fadenmaterial zurückgreift. Hierbei handelt es sich um einen speziellen Kunststoff, nämlich ein teilkristallines thermoplastisches Polymer im Allgemeinen und Polyamid im Besonderen.

Der thermoplastische Kunststoff zur Herstellung der Fäden der Gewebebeschichtung verfügt üblicherweise über eine Wasseraufnahme von ca. 1 Gew.-% bis 3 Gew.-% (gemessen bei 23°C Temperatur und 50 % Luftfeuchtigkeit). Außerdem ist in den fraglichen thermoplastischen Kunststoff bzw. das Polyamid (PA) Ruß eingebettet, und zwar in einer Menge von ca. 15 Gew.-% bis 50 Gew.-%. Dadurch kann insgesamt der sogenannte Flächenwiderstand bzw. Oberflächenwiderstand der solchermaßen hergestellten Beschichtung 7 auf Werte von unter 100 kΩ reduziert werden. Dieser Oberflächenwiderstand wird zwischen den Längsrändern des fraglichen Förderbandes 4 gemessen.

Außerdem wird ein Gewebe zur Realisierung der Beschichtung 7 bzw. Gewebebeschichtung eingesetzt, welches mit mehr als 5 Kettfäden/cm und mehr als 5 Schussfäden/cm ausgerüstet ist. Üblicherweise kommen sogar mehr als 10 Fäden/cm und insbesondere sogar mehr als 20 Fäden/cm je Richtung des Gewebes zum Einsatz. Dadurch bildet die Beschichtung 7 eine nahezu geschlossene Oberfläche an der Oberseite des Förderbandes 4 aus, die flexibel ausgelegt ist und zugleich über eine äußerst hohe Abriebfestigkeit verfügt. In Verbindung mit der Tatsache, dass das Förderband 4 an Führungsleisten 8 anliegt, werden besonders günstige Reibverhältnisse erzielt. Die Führungsleisten 8 sind an die Magnethalteelemente 3 angeschlossen.

Tatsächlich liegen die besagten Führungsleisten 8 einerseits an der Oberseite des Förderbandes 4 an und sorgen andererseits für eine seitliche Führung des Förderbandes 4. Denn das Förderband 4 verfügt im Rahmen des Ausführungsbeispiels über zwei voneinander beabstandete Reihen an Zähnen 6 in der Förderrichtung. Zwischen diesen beiden Reihen und jeweils im Vergleich zum Rand des Förderbandes 4 werden insgesamt drei Abstandsbereiche beobachtet, in welchen die Führungsleisten 8 angeordnet sind. Dadurch wird eine einwandfreie seitliche Führung und eine solche in Längsrichtung bzw. Förderrichtung des Förderbandes 4 zur Verfügung gestellt.

Gleichzeitig beobachtet man günstige Reibungsverhältnisse, weil die Führungsleisten 8 mit einer reibungsreduzierenden Beschichtung ausgerüstet sind. Tatsächlich können die Führungsleisten 8 eine Metallbeschichtung aufweisen und/oder eine solche aus einem Kunststoff. In erstgenanntem Fall hat sich eine Chrombeschichtung als günstig erwiesen. Die letztgenannte Variante zeichnet sich durch eine PTFE (Polytetrafluoretylen)-Beschichtung aus. Ganz abgesehen davon ist auch die Beschichtung 7 reibungsreduzierend ausgelegt, was sich auf die spezielle Wahl des eingesetzten Kunststoffes für das Gewebe und das engmaschige Gewebe als solches zurückführen lässt.

In beiden Fällen wird eine Reibpaarung zwischen dem Förderband 4 bzw. der oberseitigen Beschichtung 7 und den Führungsleisten 8 zur Verfügung gestellt, welche mit Reibzahlen für die Gleitreibung von weniger als 0,2 und insbesondere weniger als 0,1 ausgerüstet ist. Ganz besonders bevorzugt können sogar Reibzahlen von weniger als 0,05 erreicht werden. Dadurch gelingt ein besonders reibungsarmer Transport des Förderbandes 4 und kann folglich mit geringer Antriebsleistung für die Antriebsräder gearbeitet werden. Außerdem ist der Betrieb besonders energieeffizient.

Hinzu kommt, dass eine äußerst geringe Geräuschentwicklung beobachtet wird, die sich insbesondere auf die Tatsache zurückführen lässt, dass die Zähne 6 mit der oberseitigen Beschichtung 7 ausgerüstet sind, welche einen besonders glatten und geräuscharmen Einlauf in die Taschen der Antriebsräder bewirkt. In die gleiche Richtung zielen Maßnahmen dergestalt, dass die Erfindung ausdrücklich auf zusätzliche Halteleisten für das Förderband 4 auch bei großen Förderlängen verzichten kann.

Denn zu diesem Zweck sind mehrere Stahlseile bzw. Stahllitzen 9 in das Förderband 4 bzw. seinen Gurtkörper eingebettet. Diese in Förderrichtung bzw. Längsrichtung des Förderbandes 4 verlaufenden Stahlseile 9 werden von den Magnethalteelementen 3 angezogen und sorgen dafür, dass das Förderband 4 an die Führungsleisten 8 ohne Durchhang angelegt wird. Eine zusätzliche Riffelung 10 an der Unterseite des Förderbandes 4 bzw. der den Gegenständen 1 zugewandten Seite, stellt sicher, dass etwaige Verschmutzungen, Öl etc. an den Gegenständen 1 in Vertiefungen zwischen die Riffelung 10 verdrängt werden, so dass dennoch ein einwandfreier Transport ermöglicht wird.

Die Herstellung des Förderbandes 4 erfolgt in der Regel durch eine Extrusion eines entsprechenden Kunststoffes. Im Regelfall wird als Grundmaterial für das Förderband 4 Polyurethan (PUR) eingesetzt. Dieses kann einerseits für den Grundkörper und andererseits für die Riffelung 10 mit unterschiedlicher Shore-Härte ausgelegt sein. Typischerweise wird man die Riffelung 10 härter als den Grundkörper auslegen.

Bei der Herstellung werden in den Extruder parallel zum Kunststoffgranulat die im Grundkörper eingebetteten Stahlseile 9 mit einlaufen gelassen und ebenso das Kunststoffgewebe. Das heißt, das Kunststoffgewebe wird in den Extruder mit eingeführt und legt sich ausgangsseitig an die Oberseite des solchermaßen produzierten Förderbandes 4 an. Dabei kann gegebenenfalls mit ergänzenden Haftvermittlern gearbeitet werden, um die Haftung der Beschichtung 7 auf der Oberseite des Förderbandes 4 zu begünstigen. In der Regel ist dies jedoch nicht erforderlich.

Grundsätzlich ist die antistatische Ausrüstung von Zahnriemen auch mit Geweben bekannt, wie die DE 100 29 470 C2 oder auch die DE 102 30 306 A1 belegen. Entsprechende Riemen bzw. Zahnriemen sind bisher allerdings nicht bei Magnetfördereinrichtungen zum Einsatz gekommen, erst recht nicht in Verbindung mit den speziellen Führungsleisten, um die gewünschten Reibzahlen zu erreichen.

Infolge der geringen Reibung ist zudem der Anlauf des erfindungsgemäßen Förderbandes 4 problemlos möglich, weil ein diesbezüglich in der Praxis oft zu beobachtendes Losbrechmoment praktisch nicht vorhanden ist. Dadurch kann mit einer insgesamt reduzierten Antriebsleistung für die einzelnen Antriebsräder des Förderbandes 4 gearbeitet werden. Das heißt die Haftreibung zwischen dem Förderband 4 und den Führungsleisten 8 ist gegenüber der Gleitreibung nicht signifikant erhöht. Hierin sind die wesentlichen Vorteile zu sehen.

## Patentansprüche

1. Magnetfördereinrichtung zum Transport von insbesondere plattenförmigen Gegenständen (1), mit mehreren in Förderrichtung hintereinander angeordneten Magnethalteelementen (3), ferner mit zumindest einem an den Magnethalteelementen (3) vorbeilaufenden Förderband (4), welches mit mehreren auf seiner den Gegenständen (1) abgewandten Oberseite angeordneten Zähnen (6) zum Eingriff in zugehörige Antriebselemente für den Antrieb des Förderbandes (4) ausgerüstet ist, und mit an die Magnethalteelemente (3) angeschlossenen Führungsleisten (8), welche an den Zähnen (6) sowie an der Oberseite des Förderbandes (4) anliegen,
**dadurch gekennzeichnet, dass**
- die Führungsleisten (8) eine Metallbeschichtung aufweisen und/oder eine solche aus Kunststoff, und dass
- wenigstens die Oberseite des Förderbandes (4), d.h. die den Gegenständen (1) abgewandte und den Magnethalteelementen (3) zugewandte Seite mit den dort angeordneten Zähnen (6), eine vollflächige sowie antistatische Beschichtung (7) aufweist, wobei
- die Beschichtung (7) einen elektrischen Oberflächenwiderstand besitzt, der unterhalb von 100 kΩ angesiedelt ist.

2. Magnetfördereinrichtung nach Anspruch 1, **dadurch gekennzeichnet, dass** die Führungsleisten (8) und die Beschichtung (7) des Förderbandes (4) so ausgebildet sind, dass sie eine Reibpaarung mit einer Reibzahl (Gleitreibung) von weniger als 0,2, insbesondere weniger als 0,1, bilden.

3. Magnetfördereinrichtung nach Anspruch 1 oder 2, **dadurch gekennzeichnet, dass** die Beschichtung (7) des Förderbandes (4) als Gewebebeschichtung, insbesondere Kunststoffgewebebeschichtung, ausgebildet ist.

4. Magnetfördereinrichtung nach Anspruch 3, **dadurch gekennzeichnet , dass** es sich bei dem Kunststoffgewebe um ein solches aus einem thermoplastischem Kunststoff, insbesondere einem teilkristallinen thermoplastischen Polymer, wie beispielsweise Polyamid, handelt.

5. Magnetfördereinrichtung nach Anspruch 4, **dadurch gekennzeichnet, dass** der thermoplastische Kunststoff zur Herstellung der Beschichtung (7) eine Wasseraufnahme von ca. 1 Gew.-% bis 3 Gew.-% aufweist.

6. Magnetfördereinrichtung nach Anspruch 4 oder 5, **dadurch gekennzeichnet, dass** der thermoplastische Kunststoff einen elektrisch leitfähigen Kohlenstoff in einer Menge von ca. 15 Gew.-% bis 50 Gew.-% enthält.

7. Magnetfördereinrichtung nach einem der Ansprüche 3 bis 6, **dadurch gekennzeichnet, dass** die Gewebebeschichtung mit mehr als 5 Kettfäden/cm und 5 Schussfäden/cm ausgerüstet ist.

8. Magnetfördereinrichtung nach einem der Ansprüche 1 bis 7, **dadurch gekennzeichnet, dass** das Förderband (4) in Förderrichtung verlaufende Stahlseile oder Stahllitzen (9) aufweist.

9. Magnetfördereinrichtung nach einem der Ansprüche 1 bis 8, **dadurch gekennzeichnet, dass** das Förderband (4) aus einem thermoplastischem Kunststoff, beispielsweise Polyurethan (PUR) hergestellt ist.

10. Magnetfördereinrichtung nach einem der Ansprüche 1 bis 9, **dadurch gekennzeichnet, dass** die Magnethaltelemente (3) als Permanentmagnete und/oder schaltbare Elektromagnete ausgebildet sind.

## Claims

1. A magnetic conveyor in particular for transporting plate-shaped objects (1), having a plurality of magnetic retaining elements (3) arranged one after another in the conveying direction, in addition having at least one conveyor belt (4) running past the magnetic retaining elements (3) which is equipped with a plurality of teeth (6) arranged on its upper side facing away from the objects (1) for engaging with associated drive elements for driving the conveyor belt (4) and having guide strips (8) attached to the magnetic retaining elements (3), which guide strips lie adjacent to the teeth (6) and also to the upper side of the conveyor belt (4),
**characterized in that**
- the guide strips (8) have a metal coating and/or a coating made of plastic and that
- at least the upper side of the conveyor belt (4), i.e. the side facing away from the objects (1) and facing towards the magnetic retaining elements (3) with the teeth (6) arranged there has a full-faced and also antistatic coating (7), wherein
- the coating (7) has an electrical surface resistance located at under 100 kΩ.

2. The magnetic conveyor according to claim 1, **characterized in that** the guide strips (8) and the coating (7) of the conveyor belt (4) are configured such that they form a friction pair with a friction coefficient (dynamic friction) of less than 0.2, particularly less than 0.1.

3. The magnetic conveyor according to claim 1 or 2, **characterized in that** the coating (7) of the conveyor belt (4) is configured as a fabric coating, particularly a synthetic woven fabric coating.

4. The magnetic conveyor according to claim 3, **characterized in that** the synthetic woven fabric is one made of a thermoplastic, particularly a semi-crystalline thermoplastic such as a polyamide, for example.

5. The magnetic conveyor according to claim 4, **characterized in that** the thermoplastic used to produce the coating (7) has a water uptake of approx. 1 % by wt. to 3 % by wt.

6. The magnetic conveyor according to claim 4 or 5, **characterized in that** the thermoplastic contains an electrically conductive carbon in a quantity of approx. 15 % by wt. to 50 % by wt.

7. The magnetic conveyor according to one of the claims 3 to 6, **characterized in that** the fabric coating is provided with more than 5 warp threads/cm and 5 weft threads/cm.

8. The magnetic conveyor according to one of the claims 1 to 7, **characterized in that** the conveyor belt (4) has steel cables or steel strands (9) running in the conveying direction.

9. The magnetic conveyor according to one of the claims 1 to 8, **characterized in that** the conveyor belt (4) is produced from a thermoplastic, for example polyurethane (PUR).

10. The magnetic conveyor according to one of the claims 1 to 9, **characterized in that** the magnetic retaining elements (3) are configured as permanent magnets and/or switchable electromagnets.

## Revendications

1. Système de convoyeur magnétique destiné à transporter notamment des objets (1) en forme de plaques, avec plusieurs éléments de retenue (3) magnétiques, par ailleurs avec au moins une bande de transport (4) passant devant les éléments de retenue (3) magnétiques, qui est équipée de plusieurs dents (6) placées sur sa face supérieure opposée aux objets (1), destinées à s'engager dans des éléments d'entraînement associés pour l'entraînement de la bande de transport (4) et avec des baguettes de guidage (8) raccordées sur les éléments de retenue (3) magnétiques, qui sont adjacentes aux dents (6) ainsi qu'à la face supérieure de la bande de transport (4),
**caractérisé en ce que**
- les baguettes de guidage (8) comportent un revêtement métallique et/ou un tel en matière plastique et **en ce**
- **qu'**au moins la face supérieure de la bande de transport (4), c'est-à-dire la face opposée aux objets (1) et dirigée vers les éléments de retenue (3) magnétiques avec les dents (6) qui y sont placées comporte un revêtement (7) à pleine surface et antistatique,
- le revêtement (7) faisant preuve d'une résistance électrique superficielle qui se situe à moins de 100 kΩ.

2. Système de convoyeur magnétique selon la revendication 1, **caractérisé en ce que** les baguettes de guidage (8) et le revêtement (7) de la bande de transport (4) sont conçus de sorte à créer un couple de friction d'un coefficient de friction (friction de glissement) de moins de 0,2, notamment de moins de 0,1.

3. Système de convoyeur magnétique selon la revendication 1 ou la revendication 2, **caractérisé en ce que** le revêtement (7) de la bande de transport (4) est conçu en tant que revêtement textile, notamment en tant que revêtement textile synthétique.

4. Système de convoyeur magnétique selon la revendication 3, **caractérisé en ce que** le textile synthétique en est un en matière thermoplastique, notamment en un polymère thermoplastique semi-cristallin, comme par exemple le polyamide.

5. Système de convoyeur magnétique selon la revendication 4, **caractérisé en ce que** la matière thermoplastique destinée à fabriquer le revêtement (7) fait preuve d'une absorption d'eau d'environ 1 % en poids à 3 % en poids.

6. Système de convoyeur magnétique selon la revendication 4 ou la revendication 5, **caractérisé en ce que** la matière thermoplastique contient un carbone conducteur d'électricité dans une quantité d'environ 15 % en poids à 50 % en poids.

7. Système de convoyeur magnétique selon l'une quelconque des revendications 3 à 6, **caractérisé en ce que** le revêtement textile est muni de plus de 5 fils de chaîne/cm et 5 fils de trame/cm.

8. Système de convoyeur magnétique selon l'une quelconque des revendications 1 à 7, **caractérisé en ce que** la bande de transport (4) comporte des câbles d'acier ou des torons d'acier (9) s'étendant dans le sens de transport.

9. Système de convoyeur magnétique selon l'une quelconque des revendications 1 à 8, **caractérisé en ce que** la bande de transport (4) est fabriquée en une matière thermoplastique, par exemple en polyuréthane (PUR).

10. Système de convoyeur magnétique selon l'une quelconque des revendications 1 à 9, **caractérisé en ce que** les éléments de retenue (3) magnétiques sont conçus en tant qu'aimants permanents et/ou en tant qu'électroaimants commutables.
